# EUROPEAN PATENT SPECIFICATION

(11) **EP 0 989 928 B1**
(45) Date of publication and mention of the grant of the patent: **02.01.2002**
(21) Application number: 98931441.4
(22) Date of filing: 19.06.1998
(51) Int. Cl.: B27C 9/02, B23D 49/08

(54) **COMBINED SAWING AND DRILLING MACHINE, AND METHOD FOR PROCESSING A PLATE**
KOMBINIERTE BOHR- UND SÄGEMASCHINE, UND PLATTENBEARBEITUNGSVERFAHREN
ENSEMBLE COMBINE PERCEUSE-MACHINE A SCIER ET PROCEDE D'USINAGE D'UNE PLAQUE

(30) Priority: 21.06.1997 KR 2600358
(43) Date of publication of application: 05.04.2000
(73) Proprietor: SDS USA Inc., Palisades Park, NJ 07650 (US)
(72) Inventor: SONG, Byung-Jun, Kwangmyung-city,Kyungki-do (KR)
(74) Representative: Woodward, John Calvin
(86) International application number: US9812889
(87) International publication number: WO9858782

(56) References cited:
- US-A- 2 417 170
- US-A- 4 288 851
- US-A- 5 119 708

## Description

### BACKGROUND OF THE INVENTION

### 1. Field of the Invention

The present invention relates to a sawing machine and a processor controlled sawing method for a workpiece, such as a plate member, and more particularly, to a sawing machine and a processor controlled method in which drilling and sawing functions for a predetermined plate member can be performed integrally or in a single operation.

### 2. Description of the Related Art

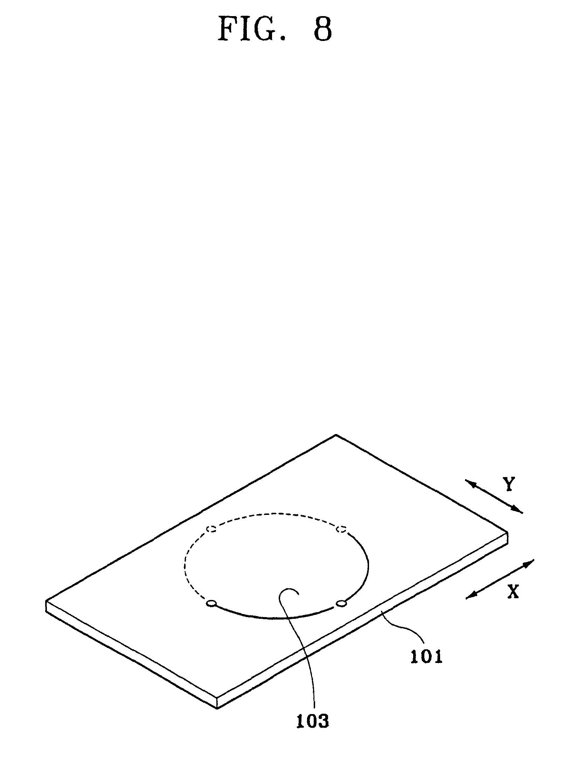

To shape a workpiece, such as a panel, plywood, or plate made of materials such as wood, paper, metal, etc., into products of a desired shape, it is generally necessary to perform a plastic deformation such as, for example, cutting, folding and bending a plate member. For example, in order to fabricate new products of various designs, a sawing and cutting process which cuts a predetermined pattern 103 from the central portion of a plate surface, as shown in Fig. 8, may be required.

However, it is often difficult to perform a sawing function in the central portion of the plate surface of a plate member 101 since two discrete functions are required. That is, a hole must first be formed at a predetermined position of the plate member 101 with a drilling machine or a punching machine to permit insertion of a saw blade therethrough, and then the sawing function may be performed with a sawing machine to make a desired shape. Therefore, use of prior art machines has proven to be inconvenient since two discrete operations (i.e., drilling and sawing) are required, and also a separate device must be provided to execute each function. Recently, such a dual function for drilling and sawing has been performed using a laser, but the laser has drawbacks in that a cutting edge of the plate member is uneven due to high temperatures associated therewith, and the manufacturing cost increases.

Langfelder proposed a combined boring and reciprocable saw machine (US-A-24 17 170), but did not disclose any control mechanism for moving the workpiece or precisely working the drilling/sawing tool.

Therefore, there is a need in the art for an apparatus capable of performing the two functions of drilling and sawing in a single operation.

### SUMMARY OF THE INVENTION

In order to solve this and other problem, it is an object of the present invention to provide a sawing machine and a sawing processing method in which drilling and sawing functions for a predetermined plate member can be performed integrally, thereby easily and efficiently providing a plate shape of a desired pattern.

To accomplish the objects of the present invention, there is provided a workpiece processing apparatus according to claim 1.

The tool assembly may include a drilling assembly and a sawing assembly. The sawing assembly further includes a chucking member shaped in the form of a round bar, the chucking member having a hook assembly on an upper end thereof, the hook assembly configured to move between an engagement position with an end of the tool after the end is passed through a hole formed in the workpiece, and a release position therefrom. The sawing assembly further includes a bushing configured to at least partly house the chucking member, the bushing further configured to guide the chucking member during longitudinal motion; a motor mounted adjacent to the chucking member; a driving pulley mounted on a driving shaft connected to the motor; a driven pulley mounted on a circumferential surface of the bushing; and
a belt mounted around the driving pulley and the driven pulley to transfer a driving force of the motor from the driving pulley to the driven pulley to rotate the bushing. The sawing assembly further includes an elevation motor assembly mounted adjacent to the chucking member for moving the chucking member in a longitudinal reciprocating motion and a release mechanism for releasing the engagement between the hook and the tool.

The drilling assembly includes a cylindrical tube for housing the tool; a cylinder actuator for moving the tool in a longitudinal direction; and a rotary driving assembly for rotating the tool, wherein the rotary driving assembly further includes a motor mounted adjacent to the cylindrical tube; a driving pulley mounted on a driving shaft connected to the motor; a driven pulley mounted on a circumferential surface of the cylindrical tube; and a belt mounted around the driving pulley and the driven pulley to transfer a driving force of the motor from the driving pulley to the driven pulley.

A method for processing a workpiece is also provided which includes the steps of providing a workpiece processing apparatus capable of performing a drilling function and a sawing function; placing the workpiece on a workpiece mounting assembly of the workpiece processing apparatus; positioning a drilling assembly of the workpiece processing apparatus above a predetermined location on the object; rotating the drilling assembly to drill a hole through the workpiece; chucking the tool after it passes through the hole drilled in the workpiece; reciprocating the tool to cut a portion of the workpiece; and moving the workpiece mounting assembly to thereby move and cut the workpiece based on a predetermined set of data.

A cutting and drilling tool is also provided which includes an elongate shaft wherein a first portion of the elongate shaft is formed in a shape of a drill bit for drilling a hole in a workpiece and a second portion of the elongate shaft has at least one cutting edge formed thereon for cutting the workpiece. The cutting and drilling tool may be formed of a hardened steel and may have a plurality of saw teeth formed on the second portion of the elongate shaft for cutting the workpiece.

### BRIEF DESCRIPTION OF THE DRAWINGS

For a better understanding of the invention, reference is made to the following description of exemplary embodiments thereof, and to the accompanying drawings, wherein:
Fig. 1 is a side view illustrating an embodiment of a sawing machine in accordance with the present invention;
Fig. 2 is a front view in cross-section illustrating the sawing machine of Fig. 1;
Fig. 3 is a block diagram of the sawing machine shown in Fig. 1;
Figs. 4 and 5 are cross-sectional views showing working states of the sawing machine of Fig. 2, in which a drilling function and a sawing function are performed in turn;
Fig. 6 is an exploded cross-sectional view of Fig. 5 showing a state that a saw blade is chucked; and
Fig. 7 is a flow chart illustrating a sawing process according to the present invention;
Fig. 8 is a perspective view illustrating a processed plate member; and
Fig. 9 is a perspective view illustrating a combination saw blade and drill bit for use with the sawing machine of the present invention.

### DETAILED DESCRIPTION OF PREFERRED EMBODIMENTS

Preferred embodiments of the present invention will be described below in more detail with reference to the accompanying drawings.

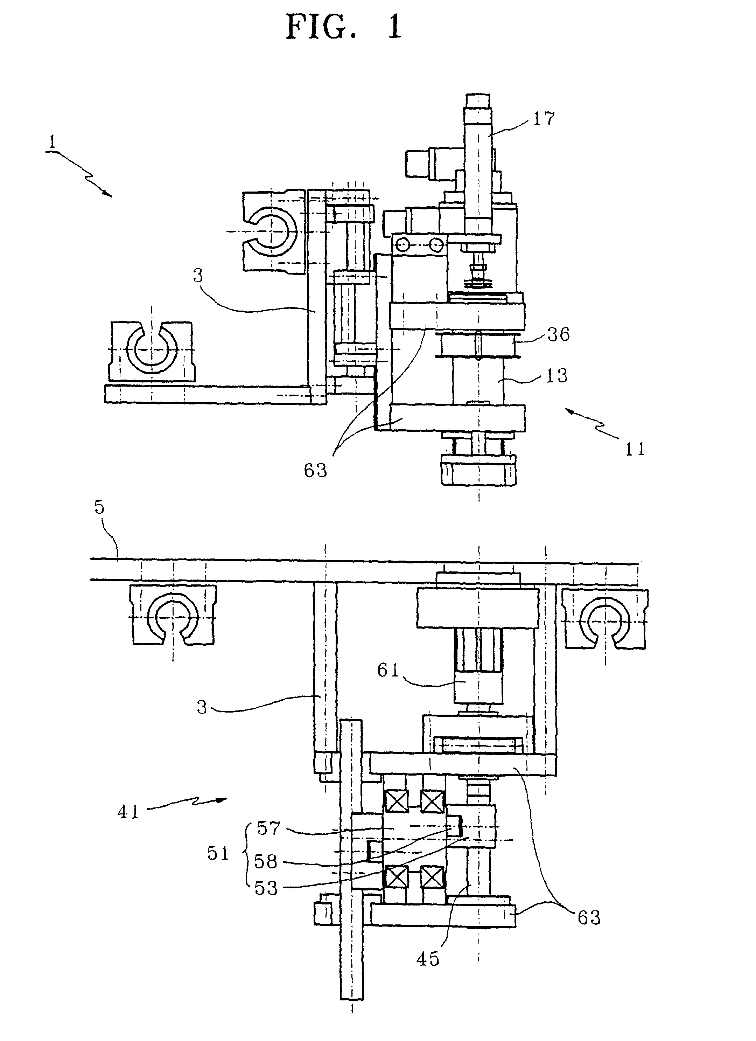

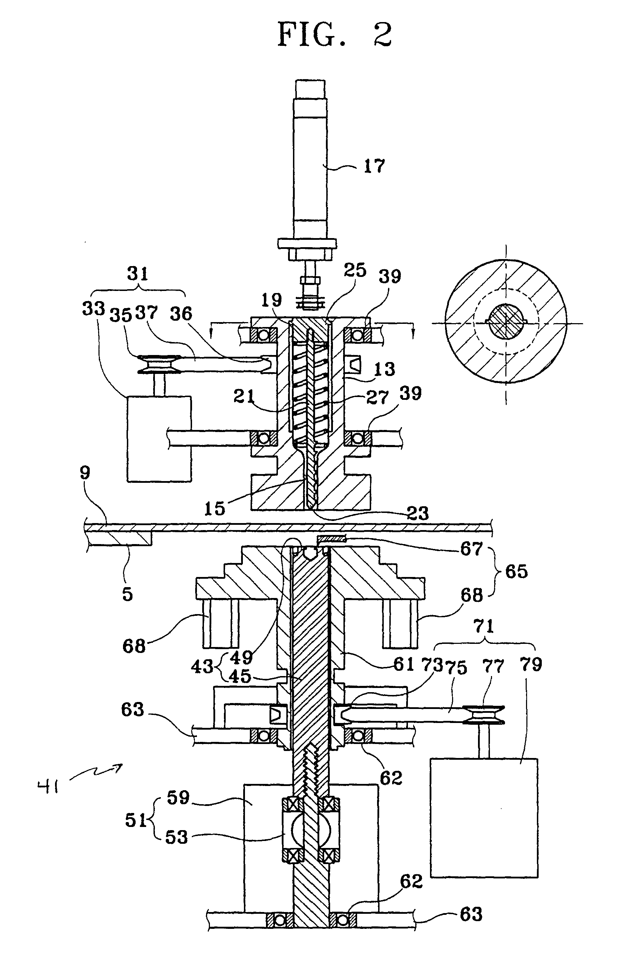

Fig. 1 is a side view of a workpiece processing machine for sawing and drilling according to an embodiment of the present invention, and Fig. 2 is a front cross-sectional view illustrating the sawing machine shown in Fig. 1. As can be seen in the figures, a sawing machine 1 comprises a table 5 disposed in a horizontal direction at the central portion of a frame 3 forming the overall appearance thereof, and a drilling processing assembly 11 and a sawing processing assembly 41 are provided on opposing sides of and centered about table 5. The table 5 is movably positioned along a plate surface of the frame 3, and configured to support a predetermined plate member for processing.

The drilling processing assembly 11 comprises a cylindrical saw blade accommodating tube 13 which is disposed in a vertical direction. A bore 15 having a downwardly-formed opening is formed in tube 13. A saw blade 21 is positioned in the saw blade accommodating tube 13 and is configured to move upwards and downwards. A saw blade cylinder 17 for moving the saw blade 21 positioned in the saw blade accommodating tube 13 upwards and downwards is positioned adjacent an end of tube 13. A rotary driving assembly 31 is operatively connected to the saw blade accommodating tube 13 for rotating the saw blade accommodating tube 13. A drill bit 23 is formed at a lower portion of the saw blade 21, and a slider 25 slidably mounted within an inner wall of the saw blade accommodating tube 13 is connected to the upper portion of saw blade 21. A guiding rail grove 19 for guiding the slider 25 is formed along a longitudinal direction of an inner wall surface of the saw blade accommodating tube 13. When the saw blade 21 ascends or descends, the drill bit 23 can project and retract through the saw blade bore 15 of the saw blade accommodating tube 13. An elastic spring 27 for elastically urging the slider 25 upwards is positioned in the saw blade accommodating tube 13.

The rotary driving assembly 31 of the saw blade accommodating tube 13 comprises a drill motor 33 spaced apart with a predetermined interval at an outer side of the saw blade accommodating tube 13, a driving pulley 35 mounted on a driving shaft of the drill motor 33, a driven pulley 36 disposed about a circumferential surface of the saw blade accommodating tube 13, and a belt 37 operatively connecting the driving pulley 35 and the driven pulley 36 so as to transfer the driving force of the drill motor 33. A pair of bearings 39 are installed on the circumferential surface of the saw blade accommodating tube 13 along a longitudinal direction thereof. The bearings 39 minimize the friction and vibration associated with the high-speed rotation of the saw blade accommodating tube 13.

The sawing processing assembly 41 comprises a chucking part 43 for chucking the saw blade 21 which is passed through a plate member 9, an elevation driving part 51 for moving the chucking part 43 upwards and downwards, and a rotary driving part 71 for rotating the chucking part 43.

The chucking part 43 comprises a round, bar shaped chucking member 45, which is disposed on a side of the longitudinal axis of plate member 9 which is opposite to the saw blade accommodating tube 13 and configured to be ascended and descended, and a hook 49 positioned at an upper end of the chucking member 45. The hook 49 is biased such that it is capable of moving between an engagement position with the drill bit 23 of the saw blade 21 and a release position therefrom.

The elevation driving part 51 of the chucking part 43 comprises an elevation motor 59 spaced apart at a predetermined distance to one side of the chucking member 45, a driving bearing 57 connected to a driving shaft of the elevation motor 59, and a driven bearing 53 installed at a lower end portion of the chucking member 45. The driven bearing 53 is interposed between the chucking members 45 which are integrally movably connected up and down. The driving bearing 57 and the driven bearing 53 have an axis of rotation which is transverse with respect to the longitudinal axis of the chucking member 45. The driving bearing 57 includes an action bar 58 which is placed eccentrically at a predetermined distance from the rotating shaft and is protruded toward the driven bearing 53. The action bar 58 and the rotating shaft of the driven bearing 53 are engaged with each other. By such a configuration, a rotary driving force of the elevation motor 59 is transferred via the driving bearing 57 and the driven bearing 53 to cause the chucking member 45 to ascend and descend. At this time, the chucking member 45 is disposed in a vertical direction at the lower portion of the table 5, and positioned in a bushing 61 which is fixed by a supporting block 63 so that the chucking member 45 may be guided upwards and downwards.

The rotary driving part 71 comprises a rotary motor 79 disposed at one side of the bushing 61, a driving pulley 77 connected to the driving shaft of the rotary motor 79, a driven pulley 73 connected to a circumferential surface of the bushing 61, and a belt 75 operatively connecting the driving pulley 77 and the driven pulley 73 for transferring the driving force therebetween. When the bushing 61 is rotated by the rotary driving part 71, the chucking member 45 is also rotated. Bearings 62 are installed on the circumferential surface of the bushing 61 and the chucking member 45, respectively, to provide easier rotation. The rotary motor 79 is provided to synchronously rotate according to the rotation of the drill motor 33.

The sawing processing assembly 41 further comprises a chucking release part 65 arranged on an upper portion of the chucking part 43 and configured to release the saw blade 21 chucked to the chucking part 43. The chucking release part 65 includes a release pin 67 for pressing the hook 49 toward a release direction, and a release cylinder 68 for moving the release pin 67 forwards and backwards with respect to the hook 49. The release pin 67, installed in a manner to be movable up and down integrally with the bushing 61, and the release cylinder 68 move the bushing 61 upwards and downwards with respect to the chucking member 45. When the release pin 67 descends by the release cylinder 68, chucking between the saw blade 21 and the hook 49 is released.

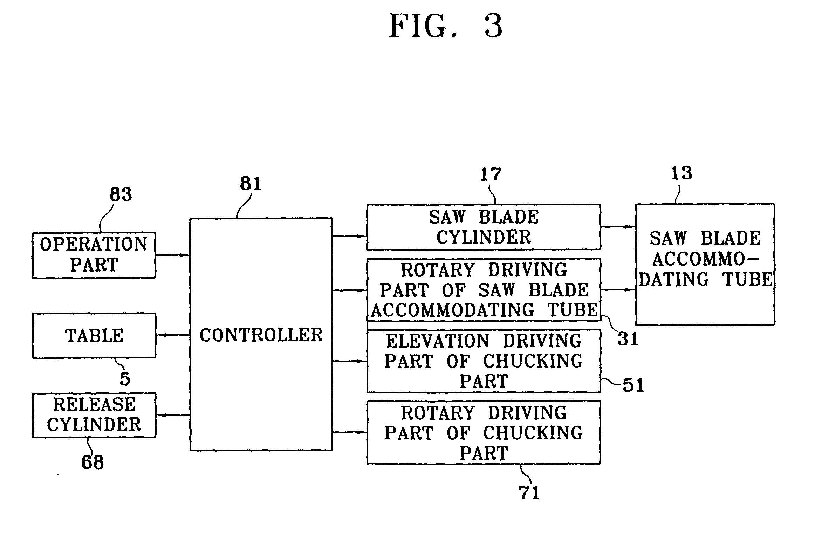

The sawing machine 1 constructed as described above, as shown schematically in Fig. 3, comprises the table 5 for supporting a plate member, the saw blade cylinder 17 for moving the saw blade 21 up and down, the rotary driving part 31 of the saw blade accommodating part for integrally rotating the saw blade 21 and the saw blade accommodating tube 13 in which the saw blade 21 is accommodated, and the elevation driving part 51 of the chucking part for moving the chucking part 43 chucked to the saw blade 21 up and down.

The various parts and functions of the sawing machine are controlled by a controller 81. The controller 81 stores predetermined data relating to sawing processing, and performs drilling and sawing functions into the plate member 9 based on an external set of data which is input into the controller 81 via an operation part 83 and stored data. The controller 81 also controls the release cylinder 68 to release the saw blade 21 chucked to the chucking part 43.

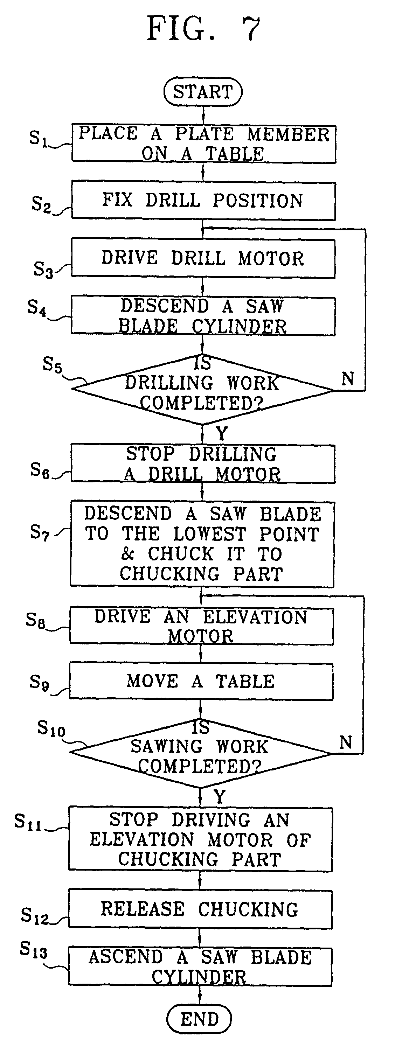

A sawing processing method which utilizes an embodiment of the sawing machine according to the present invention will now be described in detail with reference to the flow chart of Fig. 7. To execute a sawing function, the predetermined plate member 9 is first placed on the table 5 (step S1). The controller 81 controls the table 5 according to the external input and stored data to position the plate member 9 being drilled perpendicularly under the saw blade 21 (step S2). When the plate member 9 is properly positioned, the drill motor 33 is driven to rotate the saw blade accommodating tube 13 (step S3), and at the same time the saw blade cylinder 17 is descended (step S4) to perform a drilling function on the plate surface of the plate member. When the drilling work is completed (step S5), a rotational speed of the saw blade 21 passed through the plate member 9 is gradually reduced due to a stop signal given to the drill motor 33 (step S6), and at the same time the saw blade 21 is descended to the lowest point by pressing the saw blade cylinder 17, thereby being chucked to the chucking part 43 (step S7). Since the rotary motor 79 rotates synchronously according to the rotation of the drill motor 33, a chucking position of the saw blade 21 always conforms with the chucking part 43, thereby accurately chucking the saw blade 21. Thus, damage and breakage of the saw blade 21 are prevented.

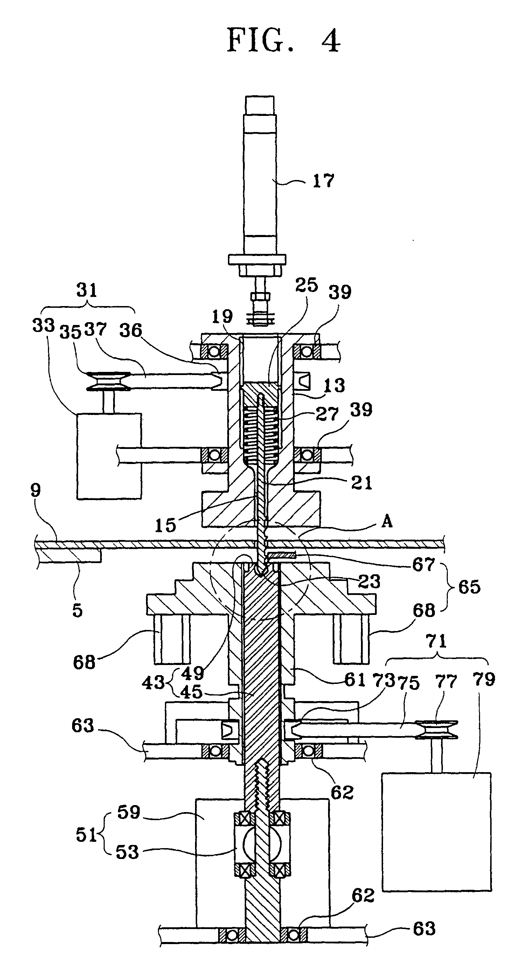

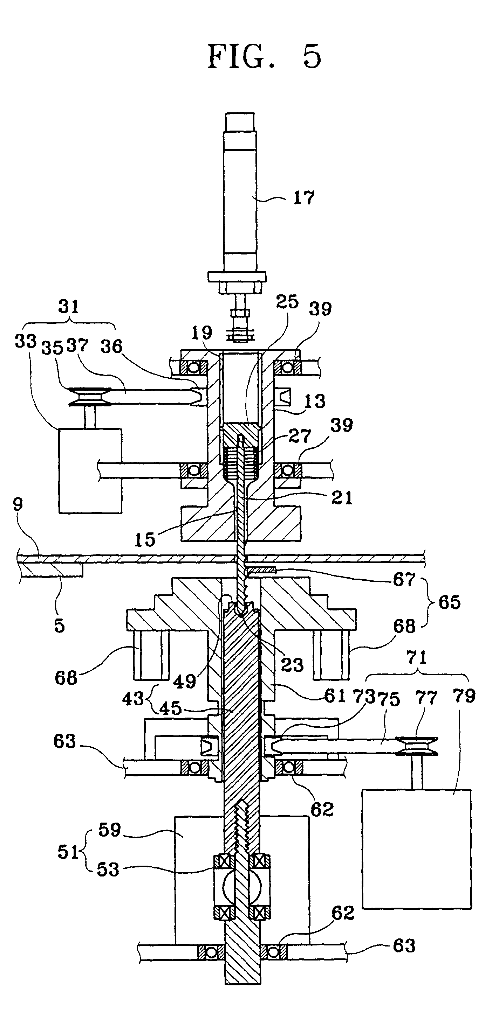

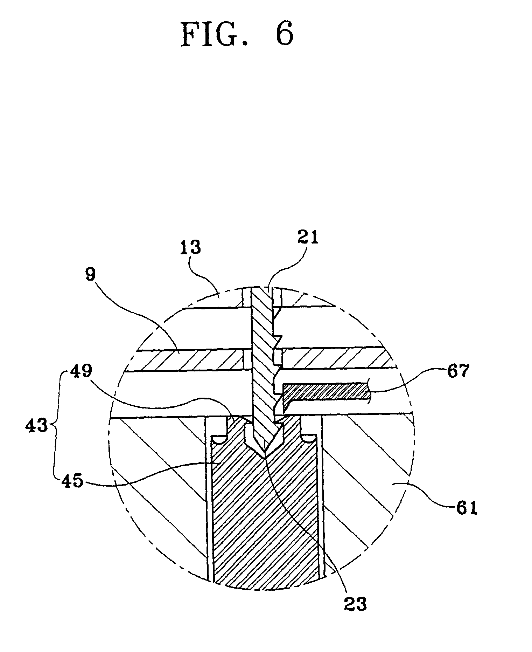

Fig. 6 shows an exploded view of the drill part 23 of the saw blade 21 chucked to the hook 49 of the chucking part 43. When the saw blade 21 is chucked to the chucking part 43, the controller 81 drives the elevation motor 59 of the chucking part to rotate the driving bearing 57 (step S8). At this time, the rotation of the action bar 58 of the driving bearing 57 which is placed eccentrically makes the driven bearing 53 move up and down, so that the chucking member 45 is moved upwards and downwards. Thus, as shown in Figs. 4 and 5, the saw blade 21 is moved upwards and downwards. When the chucking part 43 starts to ascend and descend, the controller 81 simultaneously controls the movement of table 5 (step S9) to cause a desired sawing work to be performed on the plate member 9.

When the sawing work is completed (step S10), the controller 81 stops the elevation motor 59 (step S11), and releases the chucking of the saw blade 21 by descending the release pin 67 via the release cylinder 68 (step S12). Next, the saw blade 21 is moved to an initial position by moving the saw blade cylinder 17 upwards and downwards (step S13).

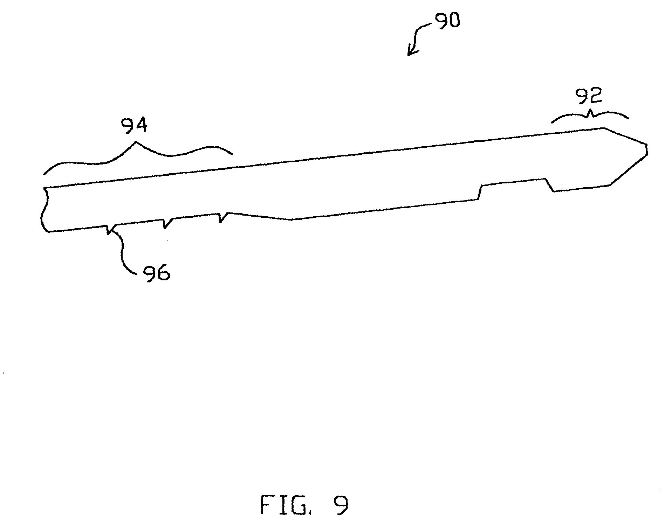

Referring now to Fig. 9, a combination saw blade and drill bit member 90 for use with the sawing machine 1 of the present invention is illustrated. Combination member 90 includes a drill bit portion 92 and a saw blade portion 94. The drill bit portion 92 forms a tip on an end of combination assembly 90 which allows a user to drill a hole in an object, such as a plate material, to provide access within the object for the saw blade portion. Once the hole is formed in the object via the drill bit portion 92, the combination member 90 may be projected through the hole to facilitate cutting a desired shape in the object via the saw blade portion 94. A plurality of teeth 96 are formed on an edge of saw blade portion 94 to facilitate cutting of an object. It is contemplated that a straight cutting edge may be formed on the combination member 90 to replace the plurality of teeth 96. The combination assembly may be configured in any dimension necessary to suit the particular needs of the work to be performed. For example, the diameter of the drill bit portion 92 may be larger or smaller, or the number of teeth 96 on the saw blade portion 94 may vary. Also, the combination assembly 90 is preferably formed of a suitable material, such as hardened metal, which is typically used for cutting through wood, plastic, metal or another material.

As described above, the sawing machine and the sawing processing method according to the present invention can perform drilling and sawing works integrally on a predetermined plate member.

Although the illustrative embodiments of the present invention have been specifically described herein with reference to the accompanying drawings, it will be apparent that numerous changes and modifications may be made thereto by one having ordinary skill in the art without departing from the spirit and scope of the invention. All such changes and modifications are intended to be included within the scope of the invention as defined by the appended claims.

## Claims

1. A workpiece processing apparatus comprising:
a workpiece mounting assembly (5) for receiving a workpiece (9);
a tool assembly (21, 23) having a tool mounting element (13) configurated for rotational and reciprocating motion, the tool assembly (21, 23) positioned adjacent to the workpiece mounting assembly;
said workpiece being movable relative to said tool assembly (21,23) and the tool (23) can be positioned adjacent to the workpiece (9); and
the tool (23) positioned in said tool mounting element (13) defines a longitudinal axis,
**characterized in that**
the tool having a drilling portion (92), a cutting portion (94) for the dual function of drilling and subsequential jig-saw cutting the workpiece, the workpiece mounting assembly (5) is controllably movable relative to said tool assembly (21, 23) for positioning the workpiece (9) along a predetermined path of cutting,
and **in that**
an elevation motor (59) and a gear (53, 58) linked to a chucking member (43) are provided for powering the tool (23) in the jig-saw cutting mode by chucking the tip portion of the tool (23) after completion of the drilling action.

2. The workpiece processing apparatus as recited in claim 1, wherein the tool assembly (21, 23) includes a drilling assembly (11) and a sawing assembly (41).

3. The workpiece processing apparatus as recited in claim 1, further comprising:
a controller (81) for controlling the movement of the workpiece mounting assembly (5) and the tool assembly (21, 23).

4. The workpiece processing apparatus as recited in claim 3, wherein the controller (81) controls movement of the workpiece mounting assembly (5) and the tool assembly (21, 23) according to data which corresponds to a predetermined cut configuration.

5. The workpiece processing apparatus as recited in claim 2, wherein the sawing assembly (41) further comprises a chucking member (45) for chucking the tool.

6. The workpiece processing apparatus as recited in claim 5, wherein the chucking member (45) is shaped in the form of a round bar and has a hook assembly (49) on an upper end thereof, the hook assembly (49) configured to move between an engagement position with an end of the tool after the end is passed through a hole formed in the workpiece, and a release position therefrom.

7. The workpiece processing apparatus according to claim 5, wherein the sawing assembly (41) further comprises:
a bushing (61) configured to at least partly house the chucking member (45), the bushing (61) further configured to guide the chucking member (45) during longitudinal motion;
a motor (79) mounted adjacent to the chucking member (45);
a driving pulley (77) mounted on a driving shaft connected to the motor (79);
a driven pulley (73) mounted on a circumferential surface of the bushing (61); and
a belt (75) mounted around the driving pulley (77) and the driven pulley (73) to transfer a driving force of the motor (79) from the driving pulley (77) to the driven pulley (73) to rotate the bushing (61).

8. The workpiece processing apparatus according to claim 5, wherein the sawing assembly (41) further comprises:
an elevation motor assembly (59) mounted adjacent to the chucking member (45) for moving the chucking member (45) in a longitudinal reciprocating motion.

9. The workpiece processing apparatus according to claim 5, wherein the sawing assembly (41) further comprises:
a release mechanism for releasing the engagement between the hook (49) and the tool (23).

10. The workpiece processing apparatus according to claim 2, wherein the drilling assembly (11) further comprises:
an actuator for moving the tool in a longitudinal direction; and
a rotary driving assembly (31) for rotating the tool.

11. The workpiece processing apparatus according to claim 10, wherein the rotary driving assembly (31) further comprises:
a motor (79) mounted adjacent to the tool mounting element (13);
a driving pulley (77) mounted on a driving shaft connected to the motor (79);
a driven pulley (73) mounted on a circumferential surface of the tool mounting element (13); and
a belt mounted around the driving pulley (77) and the driven pulley (73) to transfer a driving force of the motor (79) from the driving pulley (77) to the driving pulley (77).

12. A method for processing a workpiece comprising the steps of:
providing a workpiece processing apparatus having a tool (21) capable of performing a drilling function and a sawing function;
placing a workpiece (9) on a workpiece mounting assembly (5) of the workpiece processing apparatus;
positioning the tool (21) above a predetermined location on the workpiece (9);
rotating the tool to drill a hole through the workpiece (S₃, S₄);
**characterized in that**
the tool is chucked after it passes through the hole drilled in the workpiece (9); the tool is reciprocated to cut a portion of the workpiece (S8); and the workpiece mounting assembly (5) is moved to thereby move and cut the workpiece based on a predetermined set of data.

13. The method for processing a workpiece as recited in claim 12 further comprising the step of:
chucking the tool after it passes through the hole drilled in the workpiece.

14. The method for processing a workpiece as recited in claim 12 further comprising the step of:
moving the workpiece mounting assembly (5) to thereby move and cut the workpiece (9) based on stored data.

15. The method for processing a workpiece (9) as recited in claim 12 further comprising the step of:
moving the workpiece mounting assembly (5) to thereby move and cut the workpiece (9) based on programmable data.

16. The method for processing a workpiece as recited in claim 13, wherein the positioning of the workpiece (9) is automatically controlled along a predetermined path of cut and the coupling of the tip of the blade (21) after completion of the drill operation to a reciprocating drive improves the precision of the line of cut.

17. A cutting and drilling tool (90) comprising:
an elongate shaft wherein a first portion of the elongate shaft is formed in a shape of a drill bit (92) for drilling a hole in a workpiece and a second portion (94) of the elongate shaft has at least one cutting edge (96) formed thereof for cutting the workpiece,
**characterized in that**
a third portion of the elongate shaft has a notch formed thereon for facilitating chucking of the tool, said notch is formed adjacent to the first portion.

18. The cutting and drilling tool as recited in claim 17, wherein the elongate shaft is formed of a hardened steel.

19. The cutting and drilling tool as recited in claim 17, further comprising a plurality of saw teeth (96) formed on the second portion of the elongate shaft for cutting the workpiece.

20. The cutting and drilling tool as recited in claim 17, wherein a notch is formed in the elongate shaft to facilitate chucking of the tool.

21. The cutting and drilling tool as recited in claim 20, wherein the notch is formed adjacent to the first portion.

## Patentansprüche

1. Werkstückbearbeitungsvorrichtung, umfassend:
eine Werkstückaufspannvorrichtung (5) zur Aufnahme eines Werkstücks (9);
eine Werkzeuganordnung (21, 23) mit einem Werkzeughalter (13), der für eine rotierende und oszillierende Bewegungen konfiguriert ist, wobei die Werkzeuganordnung (21, 23) benachbart zur Werkstückaufspannvorrichtung positioniert ist;
wobei das Werkstück relativ zur Werkzeuganordnung (21, 23) bewegbar ist und das Werkzeug (23) benachbart zum Werkstück (9) positioniert werden kann; und
wobei das Werkzeug (23), das im Werkzeughalter (13) positioniert ist, eine Längsachse definiert,
**dadurch gekennzeichnet, dass**
das Werkzeug einen Bohrabschnitt (92) und einen Schneidabschnitt (94) für die duale Funktion von Bohren und nachfolgendem Stichsägenschneiden des Werkstücks aufweist, wobei die Werkstückaufspannvorrichtung (5) relativ zur Werkzeuganordnung (21, 23) beweglich steuerbar ist, um das Werkstück (9) entlang eines vorbestimmten Schneidwegs zu positionieren,
und **dadurch, dass**
ein Hubmotor (59) und ein Getriebe (53, 58), verbunden mit einem Einspannelement (43), vorgesehen sind, um das Werkzeug (23) nach Vollendung des Bohrvorgangs durch Einspannen der Spitze des Werkzeugs (23) im Stichsägenschneidmodus anzutreiben,.

2. Werkstückbearbeitungsvorrichtung nach Anspruch 1, wobei die Werkzeuganordnung (21, 23) eine Bohranordnung (11) und eine Sägenanordnung (41) umfasst.

3. Werkstückbearbeitungsvorrichtung nach Anspruch 1, des weiteren umfassend eine Steuervorrichtung (81) zur Steuerung der Bewegung der Werkstückaufspannvorrichtung (5) und der Werkzeuganordnung (21, 23).

4. Werkstückbearbeitungsvorrichtung nach Anspruch 3, wobei die Steuervorrichtung (81) die Bewegung der Werkstückaufspannvorrichtung (5) und der Werkzeuganordnung (21, 23) gemäß den Daten steuert, die einer vorbestimmten Schnittkonfiguration entsprechen.

5. Werkstückbearbeitungsvorrichtung nach Anspruch 2, wobei die Sägeanordnung (41) des weiteren ein Einspannelement (45) zum Einspannen des Werkzeugs umfasst.

6. Werkstückbearbeitungsvorrichtung nach Anspruch 5, wobei das Einspannelement (45) in Form einer runden Stange ausgebildet ist und am oberen Ende eine Zapfenanordnung (49) aufweist, wobei die Zapfenanordnung (49) so konfiguriert ist, dass sie sich zwischen einer Eingreifposition mit einem Ende des Werkzeuges, nachdem das Ende durch ein Loch hindurch geführt wurde, das im Werkstück ausgebildet ist, und einer Freigabeposition davon bewegt.

7. Werkstückbearbeitungsvorrichtung nach Anspruch 5, wobei die Sägeanordnung (41) des weiteren umfasst:
eine Buchse (61), die so konfiguriert ist, dass sie zumindest teilweise das Einspannelement (45) aufnimmt, wobei die Buchse (61) des weiteren so konfiguriert ist, dass sie das Einspannelement (45) während der Längsbewegung führt;
einen Motor (79), der benachbart zum Einspannelement (45) angeordnet ist;
eine Antriebsriemenscheibe (77), die auf einer Antriebswelle befestigt ist, welche mit dem Motor (79) verbunden ist;
eine Abtriebsriemenscheibe (73), die auf einer Umfangsfläche der Buchse (61) befestigt ist; und
einen Riemen (75), der um die Antriebsriemenscheibe (77) und die Abtriebsriemenscheibe (73) herum angebracht ist, um eine Antriebskraft des Motors (79) von der Antriebsriemenscheibe (77) zur Abtriebsriemenscheibe (73) zu übertragen, um die Buchse (61) zu drehen.

8. Werkstückbearbeitungsvorrichtung nach Anspruch 5, wobei die Sägeanordnung (41) des weiteren eine Hubmotoranordnung (59) umfasst, die benachbart zum Einspannelement (45) angebracht ist, um das Einspannelement (45) in längsgerichteter Oszillation zu bewegen.

9. Werkstückbearbeitungsvorrichtung nach Anspruch 5, wobei die Sägeanordnung (41) des weiteren einen Freigabemechanismus zum Freigeben des Eingriffs zwischen dem Zapfen (49) und dem Werkzeug (23) umfasst.

10. Werkstückbearbeitungsvorrichtung nach Anspruch 2, wobei die Bohranordnung (11) des weiteren umfasst:
ein Betätigungselement zum Bewegen des Werkzeugs in eine Längsrichtung; und
eine Drehantriebsanordnung (31) zum Drehen des Werkzeugs.

11. Werkzeugbearbeitungsvorrichtung nach Anspruch 10, wobei die Drehantriebsanordnung (31) des weiteren umfasst:
einen Motor (79), der benachbart zum Werkzeughalter (13) angeordnet ist;
eine Antriebsriemenscheibe (77), die auf einer Antriebswelle befestigt ist, die mit dem Motor (79) verbunden ist;
eine Abtriebsriemenscheibe (73), die auf einer Umfangsfläche des Werkzeughalters (13) befestigt ist; und
einen Riemen, der um die Antriebsriemenscheibe (77) und die Abtriebsriemenscheibe (73) herum angeordnet ist, um eine Antriebskraft des Motors (79) von der Abtriebsriemenscheibe (73) zur Abtriebsriemenscheibe (73) zu übertragen.

12. Verfahren zur Bearbeitung eines Werkstücks, das folgende Schritte umfasst:
Bereitstellen einer Werkzeugbearbeitungsvorrichtung, die ein Werkzeug (21) aufweist, das imstande ist, eine Bohrfunktion und eine Sägefunktion auszuführen;
Platzieren eines Werkstücks (9) auf einer Werkstückaufspannvorrichtung (5) der Werkstückbearbeitungsvorrichtung;
Positionieren des Werkzeugs (21) oberhalb einer vorbestimmten Position über dem Werkstück (9);
Drehen des Werkzeugs, um ein Loch durch das Werkstück (S₃, S₄) zu bohren;
**dadurch gekennzeichnet, dass**
das Werkzeug eingespannt wird, nachdem es das Loch passiert hat, das in das Werkstück (9) gebohrt wird; wobei das Werkzeug hin- und herbewegt wird, um einen Abschnitt des Werkstücks (S8) zu schneiden und wobei die Werkstückaufspannvorrichtung (5) bewegt wird, um dadurch das Werkstück auf der Grundlage eines vorbestimmten Datensatzes zu bewegen und zu schneiden.

13. Verfahren zur Bearbeitung eines Werkstücks nach Anspruch 12, das des weiteren den Schritt des Einspannens des Werkzeugs umfasst, nachdem es das Loch passiert hat, das in das Werkstück gebohrt wird.

14. Verfahren zur Bearbeitung eines Werkstücks nach Anspruch 12, das des weiteren de Schritt des Bewegens der Werkstückaufspannvorrichtung (5) umfasst, um dadurch das Werkstück (9) auf der Grundlage von gespeicherten Daten zu bewegen und zu schneiden.

15. Verfahren zur Bearbeitung eines Werkstücks (9) nach Anspruch 12, das des weiteren de Schritt des Bewegens der Werkstückaufspannvorrichtung (5) umfasst, um dadurch das Werkstück (9) auf der Grundlage von programmierbaren Daten zu bewegen und zu schneiden.

16. Verfahren zur Bearbeitung eines Werkstücks nach Anspruch 13, wobei die Positionierung des Werkstücks (9) automatisch entlang eines Schneidwegs gesteuert wird und die Kupplung der Spitze der Klinge (21), nach Vollendung des Bohrvorganges, mit einem oszillierenden Antrieb die Präzision der Schnittlinie verbessert.

17. Schneid- und Bohrwerkzeug (90), umfassend:
einen länglichen Schaft, wobei ein erster Abschnitt des länglichen Schafts in Form eines Bohrers (92) ausgebildet ist, um ein Loch in ein Werkstück zu bohren und ein zweiter Abschnitt (94) des länglichen Schafts zumindest eine Schneidkante (96) aufweist, die zum Ausschneiden des Werkstücks ausgebildet ist,
**dadurch gekennzeichnet, dass**
ein dritter Abschnitt des länglichen Schafts eine Kerbe aufweist, die darauf ausgebildet ist, um das Einspannen des Werkzeugs zu erleichtern, wobei die Kerbe benachbart zum ersten Abschnitt ausgebildet ist.

18. Schneid- und Bohrwerkzeug nach Anspruch 17, wobei der längliche Schaft aus gehärtetem Stahl besteht.

19. Schneid- und Bohrwerkzeug nach Anspruch 17, das des weiteren eine Vielzahl von Sägezähnen (96) umfasst, die auf dem zweiten Abschnitt des länglichen Schafts zum Schneiden des Werkstücks ausgebildet sind.

20. Schneid- und Bohrwerkzeug nach Anspruch 17, wobei eine Kerbe im länglichen Schaft ausgebildet ist, um das Einspannen des Werkzeugs zu erleichtern.

21. Schneid- und Bohrwerkzeug nach Anspruch 20, wobei die Kerbe benachbart zum ersten Abschnitt ausgebildet ist.

## Revendications

1. Un appareil de traitement de pièces à usiner comportant :
un ensemble de montage (5) de pièces à usiner pour recevoir une pièce à usiner (9) ;
un ensemble d'outillage (21,23) ayant un élément de montage d'outils (13) configuré pour un mouvement rotatif et de va et vient, l'ensemble d'outillage (21, 23) positionné adjacent à l'ensemble de montage de pièces à usiner ;
ladite pièce à usiner pouvant être déplacée relativement audit ensemble à outils (21,23) et l'outil (23) pouvant être placé adjacent à la pièce à usiner (9) ; et
l'outil (23) placé dans ledit élément de montage d'outil (13) définit un axe longitudinal,
**caractérisé en ce que**
l'outil a une partie de perçage (92), une partie de coupe (94) pour la double fonction de perçage puis de découpage par scie électrique de la pièce à usiner, l'ensemble de montage (5) de pièces à usiner peut être déplacé de façon contrôlable relativement audit ensemble d'outillage (21,23) pour positionner la pièce à usiner (9) le long d'un chemin de coupe prédéterminé,
et **en ce que**
un moteur d'élévation (59) et un engrenage (53,58) lié à un élément de serrage (43) sont prévus pour alimenter l'outil (23) en mode de coupe par scie électrique en serrant la partie de pointe de l'outil (23) après la fin de l'opération de perçage.

2. L'appareil de traitement de pièces à usiner selon la revendication 1, dans lequel l'ensemble d'outillage (21,23) inclut un ensemble de perçage (11) et un ensemble de sciage (41).

3. L'appareil de traitement de pièces à usiner selon la revendication 1, qui comporte de plus :
un contrôleur (81) pour contrôler le mouvement de l'ensemble de montage (5) de pièces à usiner et de l'ensemble d'outillage (21,23).

4. L'appareil de traitement de pièces à usiner selon la revendication 3, dans lequel le contrôleur (81) contrôle le mouvement de l'ensemble de montage de pièces à usiner (5) et de l'ensemble d'outillage (21,23) selon des données qui correspondent à une configuration de coupe prédéterminée.

5. L'appareil de traitement de pièces à usiner selon la revendication 2, dans lequel l'ensemble de sciage (41) comporte de plus un élément de serrage (45) pour serrer l'outil.

6. L'appareil de traitement de pièces à usiner selon la revendication 5, dans lequel l'élément de serrage (45) revêt la forme d'une barre ronde avec un ensemble à crochet (49) sur son extrémité supérieure, l'ensemble à crochet (49) étant configuré pour se déplacer entre une position d'engagement avec une extrémité de l'outil après que l'extrémité a passé à travers un trou formé dans la pièce à usiner, et une position de dégagement relativement à celle-ci.

7. L'appareil de traitement de pièces à usiner selon la revendication 5, dans lequel l'ensemble de sciage (41) comporte de plus :
une douille (61) configurée pour renfermer au moins en partie l'élément de serrage (45), la douille (61) étant de plus configurée pour guider l'élément de serrage (45) pendant son mouvement longitudinal ;
un moteur (79) monté adjacent à l'élément de serrage (45) ;
une poulie de commande (77) montée sur un arbre menant connecté au moteur (79) ;
une poulie menée (73) montée sur une surface circonférentielle de la douille (61) ; et
une courroie (75) montée autour de la poulie de commande (77) et de la poulie menée (73) pour transférer une force d'entraînement du moteur (79) à partir de la poulie de commande (77) jusqu'à la poulie menée (73) pour faire tourner la douille (61).

8. L'appareil de traitement de pièces à usiner selon la revendication 5, dans lequel l'ensemble de sciage (41) comporte de plus :
un ensemble à moteur d'élévation (59) monté adjacent à l'élément de serrage (45) pour déplacer l'élément de serrage (45) en un mouvement longitudinal de va et vient.

9. L'appareil de traitement de pièces à usiner selon la revendication 5, dans lequel l'ensemble de sciage (41) comporte de plus :
un mécanisme de déclenchement pour déclencher l'engagement entre le crochet (49) et l'outil (23).

10. L'appareil de traitement de pièces à usiner selon la revendication 2, dans lequel l'ensemble de perçage (11) comporte de plus :
un actionneur pour déplacer l'outil dans une direction longitudinale ; et
un ensemble de commande rotatif (31) pour faire tourner l'outil.

11. L'appareil de traitement de pièces à usiner selon la revendication 10, dans lequel l'ensemble de commande rotatif (31) comporte de plus :
un moteur (79) monté adjacent à l'élément de montage d'outil (13) ;
une poulie de commande (77) montée sur un arbre de commande connecté au moteur (79) ;
une poulie menée (73) montée sur une surface circonférentielle de l'élément de montage d'outil (13) ; et
une courroie montée autour de la poulie de commande (77) et de la poulie menée (73) pour transférer une force de commande du moteur (79) depuis la poulie de commande (77) jusqu'à la poulie menée (73).

12. Un procédé pour traiter une pièce à usiner comportant les étapes suivantes :
prévision d'un appareil de traitement de pièces à usiner ayant un outil (21) capable d'effectuer une fonction de perçage et une fonction de sciage ;
mise en place d'une pièce à usiner (9) sur un ensemble de montage (5) de pièces à usiner de l'appareil de traitement de pièces à usiner ;
positionnement de l'outil (21) au-dessus d'un point prédéterminé sur la pièce à usiner (9) ;
rotation de l'outil pour percer un trou au travers de la pièce à usiner (S₃, S₄) ;
**caractérisé en ce que**
l'outil est serré après son passage à travers le trou percé dans la pièce à usiner (9) ; l'outil effectue un mouvement de va et vient pour découper une partie de la pièce à usiner (S8) ; et l'ensemble de montage (5) de pièces à usiner est déplacé de sorte à déplacer et à couper la pièce à usiner sur la base d'un jeu de données prédéterminé.

13. Le procédé pour traiter une pièce à usiner selon la revendication 12, comportant de plus l'étape suivante :
serrage de l'outil après son passage à travers le trou percé dans la pièce à usiner.

14. Le procédé pour traiter une pièce à usiner selon la revendication 12, qui comporte de plus l'étape suivante :
déplacement de l'ensemble de montage de pièces à usiner (5) de sorte à déplacer et à couper la pièce à usiner (9) sur la base de données mémorisées.

15. Le procédé pour traiter une pièce à usiner (9) selon la revendication 12, comportant de plus l'étape suivante :
déplacement de l'ensemble de montage (5) de pièces à usiner de sorte à déplacer et à couper la pièce à usiner (9) sur la base de données programmables.

16. Le procédé pour traiter une pièce à usiner selon la revendication 13, selon lequel le positionnement de la pièce à usiner (9) est contrôlé automatiquement le long d'un chemin prédéterminé de coupe et le couplage de la pointe de la lame (21) après la fin de l'opération de perçage à un moteur à va et vient améliore la précision de la ligne de coupe.

17. Un outil à couper et percer (90) comportant :
un arbre allongé dans lequel une première partie de l'arbre allongé revêt la forme d'un foret (92) pour percer un trou dans une pièce à usiner et une deuxième partie (94) de l'arbre allongé a au moins une arête (96) formée dessus pour couper la pièce à usiner ;
**caractérisé en ce que**
une troisième partie de l'arbre allongé porte une encoche pour faciliter le serrage de l'outil, ladite encoche étant formée à proximité de la première partie.

18. L'outil à couper et percer selon la revendication 17, dans lequel l'arbre allongé est formé en un acier trempé.

19. L'outil à couper et percer selon la revendication 17, qui comporte de plus une pluralité de dents de scie (96) formées sur la deuxième partie de l'arbre allongé pour couper la pièce à usiner.

20. L'outil à couper et percer selon la revendication 17, dans lequel une encoche est formée dans l'arbre allongé pour faciliter le serrage de l'outil.

21. L'outil à couper et percer selon la revendication 20, dans lequel l'encoche est formée adjacente à la première partie.
